# EUROPÄISCHE PATENTSCHRIFT

(11) **EP 0 732 799 B1**
(45) Veröffentlichungstag und Bekanntmachung des Hinweises auf die Patenterteilung: **11.08.1999**
(21) Anmeldenummer: 96102428.8
(22) Anmeldetag: 17.02.1996
(51) Int. Cl.: H02P 3/06

(54) **Reihenschlussmotor mit Bremseinrichtung**
Series motor with braking device
Moteur série avec dispositif de freinage

(30) Priorität: 11.03.1995 DE 19508881
(43) Veröffentlichungstag der Anmeldung: 18.09.1996
(73) Patentinhaber: ROBERT BOSCH GMBH, 70442 Stuttgart (DE)
(72) Erfinder: Kirn, Manfred, D-70567 Stuttgart (DE)

(56) Entgegenhaltungen:
- EP-A- 0 578 366
- DE-A- 2 002 768
- DE-A- 2 842 145

## Beschreibung

### Stand der Technik

Die Erfindung geht aus von einem Reihenschlußmotor mit einem Umschalter zur Umpolung der Stromrichtung des Ankers des Reihenschlußmotors und mit einer Bremseinrichtung nach der Gattung des Hauptanspruchs. Zum Abbremsen der durch die kinetische Energie verursachten Nachlaufdauer eines Elektromotors, der insbesondere ein Arbeitswerkzeug antreibt, sind schon mechanisch und elektrisch wirkende Bremseinrichtungen bekannt. So wird beispielsweise gemäß der DE 30 55 185 C2 zum Abbremsen der Anker bezüglich einer Feldwicklung umgepolt, wobei ein Widerstand dem Bremskreis in Reihe geschaltet ist, der den generatorischen Bremsstrom begrenzt. Eine derartige Anordnung wirkt jedoch nur in einem bestimmten Drehzahlbereich zufriedenstellend, da mit niedriger werdenden Drehzahlen der Bremsstrom und damit das Bremsmoment sinkt und somit der Elektromotor mehr oder weniger durch die Lager- oder Werkzeugreibung zum Stillstand kommt. Um aus Sicherheitsgründen einen möglichst schnellen Stillstand des Elektrowerkzeuges zu erreichen, müßte der Bremsstrom sehr hoch eingestellt werden. Ein hoher Bremsstrom bewirkt jedoch ein verstärktes Bürstenfeuer, das zu einem erhöhten Verschleiß führt, so daß die Lebensdauer des Motors verringert wird.

Unvorteilhaft ist, daß der Motor zum Bremsen wie ein selbst erregter Generator arbeiten muß. Beim Betrieb des Motors mit Wechselstrom kann jedoch die erforderliche Remanenz auch null werden, so daß dann keine Bremswirkung einsetzt und der Motor ungebremst ausläuft. Dadurch verlängert sich die Bremszeit erheblich.

Aus der DE 28 42 145 A1 ist ein Universalmotor mit Bremsschaltung bekannt geworden, bei dem mittels einem Umschalter der Strom durch den Motor im Bremsbetrieb umgepolt wird. Dadurch wird ein Abbremsen des Motors erreicht. Der Motor ist hierbei mit einem Tachogenerator verbunden, der veranlaßt, daß beim Absinken der Ankerdrehzahl in der Abschaltstellung, also beim Bremsvorgang, der Stromdurchgang gegen null geht, so daß ein Wiederhochlaufen des Motors in entgegengesetzter Richtung nicht möglich ist. Bei der Abschaltvorrichtung gemäß dieser Anordnung sind daher Mittel vorzusehen, die erkennen, wann der Motor nahezu zum Stillstand gekommen ist, um so ein Abschalten des Stromes durch den Motor zu bewirken.

### Vorteil der Erfindung

Der erfindungsgemäße Reihenschlußmotor mit den Merkmalen des Hauptanspruchs hat demgegenüber den Vorteil, daß ein Abschalten des Motors mittels einfacher Mittel zu erreichen ist und trotzdem ein Hochlaufen des Motors in der entgegengesetzten Richtung zu verhindern ist. Besonders vorteilhaft ist, daß eine Verzögerungszeit für die Betätigung des Schalters vorgesehen ist, die lediglich größer als die Abbremsdauer des Ankers ist.

Durch die in den abhängigen Ansprüchen aufgeführten Maßnahmen sind vorteilhafte Weiterbildungen und Verbesserungen des im Hauptanspruch angegebenen Reihenschlußmotor möglich. Besonders vorteilhaft ist, daß der Schalter nach einer vorgegebenen Verzögerungszeit öffnet und hierfür ein Zeitglied vorgesehen ist, das im einfachsten Fall aus einem Widerstand einer Diode und einem Kondensator gebildet ist. Dadurch wird die Schaltung besonders preisgünstig und einfach.

### Zeichnung

Zwei Ausführungsbeispiele der Erfindung sind in der Zeichnung dargestellt und in der nachfolgenden Beschreibung näher erläutert. Die Figur zeigt einen Stromlaufplan eines Ausführungsbeispiels.

### Beschreibung der Ausführungsbeispiele

Die Figur zeigt einen Stromlaufplan eines Ausführungsbeispiels. Es zeigt symbolisch einen Anker 1, der über zwei miteinander gekoppelte Umschalter 11, 12, 13 und 14, 15, 16 mit zwei Feldspulen 2, 2a und den Anschlußklemmen 21, 22 der Stromversorgung verbunden ist. Als Stromversorgung wird üblicherweise die 230 Volt Wechselspannung verwendet. Alternativ kann auch eine Batterie vorgesehen sein. Bei Batteriebetrieb ist eine Polung der Anschlußklemmen 21, 22 erforderlich, da bei falscher Polung durch die Diode 7 an der Spule 5 und dem Kondensator 8 keine Spannung anliegt. Zwischen der Klemme 21 und einer Feldspule 2 ist ein Schalter 18 angeordnet. Sowohl der Umschalter 11 bis 16 als auch der Schalter 18 werden über einen Magnetschalter 4 bzw. 5 gesteuert, die Bezugszeichen 4, 5 beziehen sich auf die entsprechenden Erregerspulen. Die Spule 4 wird mit einem Anschluß an die Netzklemme 22 geschaltet und mit ihrem zweiten Anschluß über einen Schalter 9 mit der Klemme 21 verbunden. Der Schalter 9 kann für die Zweihandbedienung, als sogenannter Totmannschalter ausgebildet sein. Der Schalter 9 ist desweiteren mit einem Anschluß der Spule 5 verbunden. Der zweite Anschluß der Spule 5 ist über eine Diode 7 und einen Vorwiderstand 6 mit der zweiten Anschlußklemme 12 verbunden. Parallel zu den Kontakten 13, 15 des Umschalters ist ein Bremswiderstand 3 geschaltet, mit dem der Bremsstrom einstellbar ist. Anstelle der Umschalter 11, 12, 13 bzw. 14, 15, 16 und dem Schalter 18 mit den Spulen 4, 5 können auch entsprechende Halbleiterschalter wie Transistoren bei Gleichspannung (Batterie) oder Thyristoren bei Wechselspannung geschaltet werden. Parallel zu der Spule 5 ist ein Kondensator 8 geschaltet, der in Verbindung mit dem Widerstand 6 und der Diode 7 ein Zeitglied für das verzögerte Öffnen des Kontaktes des Schalter 18 bildet.

Im folgenden wird die Wirkungsweise dieser Anordnung beschrieben. Im Normalbetrieb sind die Schalter 9, 18 geschlossen. Des weiteren sind die Kontakte 11, 13 bzw. 14, 16 des Umschalters geschlossen. In diesem Betriebszustand fließt nun der Strom von der Anschlußklemme 21 über den Schalter 18, die Feldwicklung 2, den Anker 1 und zurück über die Feldwicklung 2a zur Klemme 12. In diesem Fall sind durch den ebenfalls geschlossenen Schalter 9 die Spulen 4, 5 erregt, da sie mit den Anschlußklemmen 21, 22 elektrisch verbunden sind. Des weiteren ist der Kondensator über das Zeitglied 6, 8 aufgeladen. Wird zum Bremsen der Kontakt des Schalter 9 geöffnet, in dem beispielsweise der Werker das Elektrowerkzeug ablegt oder aus der Hand gleiten läßt, dann bewirkt die Spule 4, daß die Umschaltkontakte des Umschalters in die gezeichnete Position 11, 12 bzw. 14, 15 umgeschaltet werden. Der Anker 1 wird dadurch für die entgegengesetzte Drehrichtung umgepolt. Wegen der Ladung des Kondensators 8 bleibt die Spule 5 jedoch noch für eine vorgegebene Zeit weiter erregt, so daß der Kontakt des Schalters 18 noch geschlossen ist. In der Zwischenzeit bremst der Motor durch die Umpolung des Ankers 1 sehr stark ab, so daß sich die Drehzahl bis auf Null verringert. Wenn nun der Schalter 18 geöffnet wird, weil die Zeitkonstante des Zeitgliedes 6, 8 der Bremseinrichtung 4, 5, 6, 7, 8, 9 abgelaufen ist, kann der Anker 1 nicht in die Gegenrichtung hochdrehen, da er nicht mehr vom Strom versorgt wird. Die Bremszeit kann somit auf einen vorgegebenen Wert bis zum Stillstand hin begrenzt werden.

In einer Ausgestaltung der Erfindung kann der Widerstand 6 als Potentiometer ausgeführt werden, so daß die Verzögerungszeit eines mit diesem Universalmotor ausgerüsteten Elektrohandwerkzeuges von außen einstellbar ist. Dadurch kann der Werker die Bremszeit seines Elektrohandwerkzeuges in gewissen Grenzen variieren, um beispielsweise damit ein starkes Gegendrehmoment abzufangen. Durch Abstimmung des Widerstandes 3, der den Abbremsverlauf bestimmt und die Zeitkonstante aus dem Widerstand 6 und dem Kondensator 8 kann die Bremszeit bei einer bestimmten Last so aufeinander abgestimmt werden, daß der Schalter 18 etwa zum Zeitpunkt der Drehzahl Null öffnet. Besonders vorteilhaft ist dies bei Heckenscheren, Elektromäher, Sägen, Schleifer, Hobel oder dergleichen.

Um ein Wiederhochlaufen in der Gegenrichtung zu verhindern, ist eine Rücklaufsperre vorgesehen, wie sie beispielsweise als Freilaufhülse handelsüblich ist. Dadurch kann die Verzögerungszeit so groß gewählt werden, daß sie auf jeden Fall größer ist als die Abbremsdauer, da wegen der Rücklaufsperre der Anker nicht in die Gegenrichtung hochlaufen kann. Wird ein gewisser Zeitüberschuß vorgesehen, dann kann dadurch erreicht werden, daß beispielsweise auch wechselnde Lasten, wie sie bei teilweise verbrauchten Schleifscheiben vorkommen, sicher und schnell abgebremst werden.

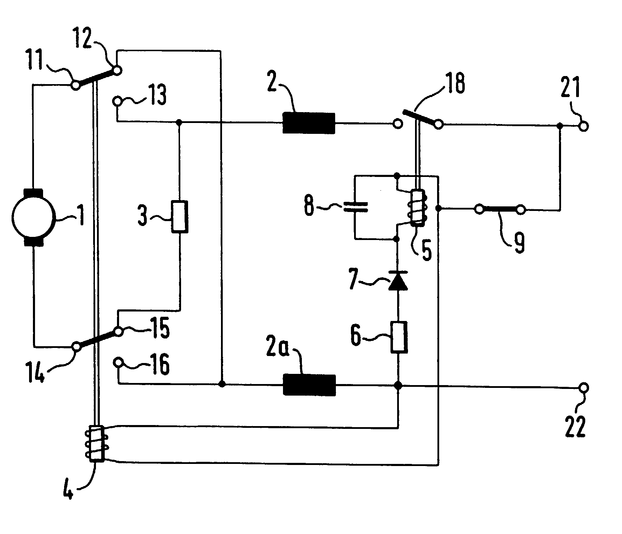

In weiterer Ausgestaltung der Erfindung kann das Relais 4 auch als mechanischer Schalter zur Drehrichtungsumschaltung ausgebildet sein. Dieser Umschalter hat dann einen zusätzlichen Kontakt, der ein Zeitverzögerungsglied gemäß der Figur 1 triggert und dann den Schalter 18 nach Ablauf der Zeitkonstanten öffnet. Natürlich kann die Zeitverzögerung auch mechanisch mit Hilfe entsprechender Dämpfungsmittel bewirkt werden.

Eine bevorzugte Anwendung für den Universalmotor ist ein Elektrohandwerkzeug, beispielsweise eine Heckenschere, ein Elektromäher, eine Säge oder ein Schleifer oder Bahre. Mit Hilfe der Bremseinrichtung kann die Abbremszeit nach dem Ausschalten des Elektrowerkzeuges auf einen Minimalwert reduziert werden.

Vollständigskeitshalber wird noch darauf hingewiesen, daß nicht zur Erfindung gehörende Mittel, wie beispielsweise ein Hauptschalter oder Anzeigen für die Spannungsversorgung und dergleichen aus Übersichtlichkeitsgründen nicht dargestellt sind.

## Patentansprüche

1. Reihenschlußmotor mit einem Umschalter zur Umpolung der Stromrichtung des Ankers des Reihenschlußmotors und mit einer Bremseinrichtung, wobei der Reihenschlußmotor einen im Hauptstromkreis angeordneten Schalter (18) aufweist, der in Betriebsstellung leitend ist und bei dem die Bremseinrichtung (4-9) derart ausgebildet ist, daß sie nach Betätigung des Umschalters (11-16) den Schalter (18) in Abhängigkeit eines Betriebsparameters betätigt, dadurch gekennzeichnet, daß der Reihenschlußmotor (1, 2) eine Rücklaufsperre hat, und daß eine Verzögerungszeit für die Betätigung des Schalters (18) vorgesehen ist, die größer ist als die Abbremsdauer des Ankers (1).

2. Reihenschlußmotor nach Anspruch 1, 2, dadurch gekennzeichn t, daß die Bremseinrichtung (4 bis 9) ein Zeitglied (6, 7, 8) aufweist mit welchem die Verzögerungszeit für das Schalten des Schalters (18) vorgegeben ist.

3. Reihenschlußmotor nach Anspruch 2, dadurch gekennzeichnet, daß das Zeitglied eine Reihenschaltung aus einem Widerstand (6) und einem Kondensator (8) aufweist, und daß der Widerstand (6) als Potentiometer ausgebildet ist.

4. Reihenschlußmotor nach einem der vorhergehenden Ansprüche, dadurch gekennzeichnet, daß die Bremseinrichtung (4 bis 9) von einem Bremsschalter (9) steuerbar ist, der mit einer Versorgungsklemme (21) verbunden ist und vorzugsweise für eine Zweihandbedienung ausgebildet ist.

5. Reihenschlußmotor nach einem der vorhergehenden Ansprüche, dadurch gekennzeichnet, daß der Umschalter (11 bis 16) und/oder der Schalter (18) Mittel (4, 5) zu deren elektrischen Betätigung aufweisen.

6. Reihenschlußmotor nach Anspruch 5, dadurch gekennzeichnet, daß die Mittel (4, 5) Magnetschalter und/oder Halbleiterschalter sind, die von dem Bremsschalter (9) steuerbar sind.

7. Reihenschlußmotor nach einem der vorhergehenden Ansprüche, dadurch gekennzeichnet, daß der Reihenschlußmotor (1, 2) für ein Elektrohandwerkzeug, vorzugsweise eine Heckenschere, einen Elektromäher, eine Säge, einen Schleifer oder ein Schneidwerkzeug verwendbar ist.

## Claims

1. Series-wound motor with a changeover switch for reversing the polarity of the direction of the current in the armature of the series-wound motor, and with a braking device, the series-wound motor having a switch (18) which is arranged in the main circuit and conducts in the operating position, and in which the braking device (4-9) is constructed in such a way that, after actuation of the changeover switch (11-16), it actuates the switch (18) as a function of an operating parameter, characterized in that the series-wound motor (1, 2) has a reverse running stop, and in that a delay time for actuating the switch (18) is provided which is longer than the braking period of the armature (1).

2. Series-wound motor according to Claim 1, characterized in that the braking device (4 to 9) has a timing element (6, 7, 8) by means of which the delay time for switching the switch (18) is prescribed.

3. Series-wound motor according to Claim 2, characterized in that the timing element has a series circuit composed of a resistor (6) and a capacitor (8), and in that the resistor (6) is constructed as a potentiometer.

4. Series-wound motor according to one of the preceding claims, characterized in that the braking device (4 to 9) can be controlled by a brake switch (9) which is connected to a supply terminal (21) and is preferably constructed for two-handed operation.

5. Series-wound motor according to one of the preceding claims, characterized in that the changeover switch (11 to 16) and/or the switch (18) have means (4, 5) for actuating them electrically.

6. Series-wound motor according to Claim 5, characterized in that the means (4, 5) are electromagnetic switches and/or semiconductor switches which can be controlled by the brake switch (9).

7. Series-wound motor according to one of the preceding claims, characterized in that the series-wound motor (1, 2) can be used for an electric hand tool, preferably a hedge clipper, an electric mower, a saw, a grinder or a cutting tool.

## Revendications

1. Moteur série comportant un inverseur pour inverser le sens du courant dans l'induit de ce moteur série et une installation de freins,
le moteur série comportant un interrupteur (18) dans le circuit principal du courant qui est passant pour une position de fonctionnement et dont l'installation de freins (4-9) est réalisée pour qu'après actionnement de l'inverseur (11-16) elle commande l'interrupteur (18) selon un paramètre de fonctionnement,
caractérisé en ce que
- le moteur série (1, 2) comporte un verrou anti-retour et
- une durée de temporisation est prévue pour l'actionnement de l'interrupteur (18),.cette durée étant supérieure à la durée de freinage de l'induit (1).

2. Moteur série selon la revendication 1,
caractérisé en ce que
l'installation de freins (4-9) comporte un élément de temporisation (6, 7, 8) qui fixe la durée de temporisation pour la commutation de l'interrupteur (18).

3. Moteur série selon la revendication 2,
caractérisé en ce que
l'élément de temporisation comprend un montage en série formé d'une résistance (6) et d'un condensateur (8) et la résistance (6) est un potentiomètre.

4. Moteur série selon l'une quelconque des revendications précédentes,
caractérisé en ce que
l'installation de freins (4-9) est commandée par l'interrupteur de freins (9) reliée à une borne d'alimentation (21) prévue de préférence pour une commande à deux mains.

5. Moteur série selon l'une quelconque des revendications précédentes,
caractérisé en ce que
l'inverseur (11-16) et/ou l'interrupteur (18) comportent des moyens (4, 5) pour leur actionnement électrique.

6. Moteur série selon la revendication 5,
caractérisé en ce que
les moyens (4, 5) sont des commutateurs magnétiques et/ou des commutateurs semiconducteurs commandés par l'interrupteur de freins (9).

7. Moteur série selon l'une quelconque des revendications précédentes,
caractérisé en ce que
le moteur série (1, 2) est applicable à un outil électrique à main, de préférence à un taille-haie, une tondeuse électrique, une scie, une meuleuse ou un outil de coupe.
